# EUROPÄISCHE PATENTANMELDUNG

(11) **EP 4 421 251 A1**
(43) Veröffentlichungstag der Anmeldung: **28.08.2024**
(21) Anmeldenummer: 23214457.6
(22) Anmeldetag: 05.12.2023
(51) Int. Cl.: E03C 1/04, F16K 31/60

(54) **FLUIDSTEUERVENTILVORRICHTUNG UND FUNKTIONSBLOCK FÜR INSTALLATIONSANSCHLUSSBOX**

(30) Priorität: 21.02.2023 DE 102023201513
(71) Anmelder: Hansgrohe SE, 77761 Schiltach (DE)
(72) Erfinder: Armbruster, Stefan, 77756 Hausach (DE); Blattner, Joachim, 77716 Haslach (DE); Brendle, Elvira, 72186 Empfingen (DE); Dold, Florian, 77716 Hofstetten (DE); Kunz, Alexander, 78730 Lauterbach (DE); Lehmann, Günther, 77709 Oberwolfach (DE); Schmider, Jürgen, 77716 Haslach (DE)
(74) Vertreter: Patentanwälte Ruff, Wilhelm, Beier, Dauster & Partner mbB

(57) **Zusammenfassung**

Die Erfindung bezieht sich auf eine Fluidsteuerventilvorrichtung mit einem Fluidsteuerventil (1) mit einem translationsbeweglichen Betätigungsglied (2) und einer Betätigungsvorrichtung (3) mit einem nutzerbedienbaren Bedienelement (4), das zur Betätigung des Fluidsteuerventils (1) mit dem Betätigungsglied (2) gekoppelt ist, sowie auf einen damit ausgerüsteten Funktionsblock zum Einbau in eine wandeingebaute Installationsanschlussbox.

Bei der erfindungsgemäßen Fluidsteuerventilvorrichtung weist die Betätigungsvorrichtung (3) eine Verlängerungsmechanik (5) auf, mit der das Bedienelement (4) relativ zum Fluidsteuerventil (1) axial höhenverstellbar ist. Zudem ist eine Verstellkraft für die Verlängerungsmechanik (5) größer als eine Betätigungskraft für das Betätigungsglied (2).

Verwendung z.B. für sanitäre Funktionsblöcke zum Einbau in wandeingebaute sanitäre Installationsanschlussboxen mit Wanddickenausgleichsfunktionalität.

## Beschreibung

Die Erfindung bezieht sich auf eine Fluidsteuerventilvorrichtung, die ein Fluidsteuerventil mit einem translationsbeweglichen Betätigungsglied und eine Betätigungsvorrichtung mit einem nutzerbedienbaren Bedienelement aufweist, das zur Betätigung des Fluidsteuerventils mit dem Betätigungsglied gekoppelt ist, sowie auf einen Funktionsblock, der zum Einbau in eine wandeingebaute Installationsanschlussbox eingerichtet ist, insbesondere einen sanitären Funktionsblock für eine sanitäre Installationsanschlussbox, wobei der Funktionsblock einen Grundkörper, einen Abdeckkörper und eine solche Fluidsteuerventilvorrichtung aufweist.

Fluidsteuerventilvorrichtungen dieser Art werden in der Sanitärtechnik und anderen Bereichen, in denen Bedarf an einer Ventilsteuerungsfunktion für die Strömung von Fluiden besteht, wie z.B. in der chemischen Industrie, in vielfältigen Typen und Ausführungen verwendet, beispielsweise als Umstellventilvorrichtungen zur Erfüllung einer Umstellfunktion und als Absperrventilvorrichtungen zur Erfüllung einer Absperrfunktion. Unter Umstellfunktion ist hierbei vorliegend zu verstehen, dass die Abgabe eines entsprechenden Fluids, wie Wasser, zwischen mehreren Ventilausgängen umgestellt werden kann. Unter Absperrfunktion ist vorliegend zu verstehen, dass die Abgabe eines entsprechenden Fluids, wie Wasser, an einem entsprechenden Ventilausgang wahlweise freigegeben oder abgesperrt, typischerweise vollständig abgesperrt, werden kann. Diese Absperrfunktion wird daher häufig auch als Ein/Aus-Funktion des Ventils bezeichnet. Der Benutzer steuert die betreffende Ventilfunktion des Fluidsteuerventils durch Drücken bzw. durch eine Axialbetätigungsbewegung des Betätigungsglieds über das als Nutzerschnittstelle fungierende Bedienelement. Das Drücken des Betätigungsglieds bewirkt die gewünschte Funktion, z.B. Absperrfunktion, indem das Betätigungsglied typischerweise auf einen damit gekoppelten, beweglichen Ventilkörper bzw. Ventilschließkörper, entsprechend einwirkt.

Die Offenlegungsschrift DE 10 2012 221 043 A1 offenbart eine derartige Fluidsteuerventilvorrichtung in Form einer Absperrventilvorrichtung mit einer pilotventilgestützt nutzerbetätigten Membranventileinheit, die einen Membranventilkörper mit einer Vorsteuerung durch ein Pilotventil umfasst, das einen axialbeweglichen Pilotventil-Steuerkolben aufweist, der vom Benutzer über eine Drucktasten-Bedieneinheit betätigbar ist, die u.a. eine axialbewegliche Drucktaste umfasst.

Weitere Fluidsteuerventilvorrichtungen dieser Art sind z.B. in den Patentschriften EP 3 699 465 B1 und EP 3 543 572 B1 offenbart.

Funktionsblöcke der oben genannten Art werden beispielsweise als sanitäre Funktionsblöcke in der Sanitärinstallationstechnik zum Anschließen von Sanitärkomponenten, wie Wasserauslaufarmaturen für Waschtische, Badewannen, Duschbrausen oder Küchenspülen oder diesen vorgelagerten sanitären Thermostat-, Mischer- und/oder Absperrventileinheiten, an gebäudeseitig vorinstallierte Wasserleitungsanschlüsse verwendet. Dazu wird der Funktionsblock in der Regel als eigenständige Baueinheit vorgefertigt und dann als solche Baueinheit an der vorgesehenen Einsatzstelle an einer Gebäudewand verbaut, i.e. montiert, im Fall eines sanitären Funktionsblocks z.B. an der Wand eines Duschraums, eines Badezimmers, einer Küche, einer Toilette etc.

Dabei wird der Funktionsblock mit seinem Grundkörper üblicherweise in einen gebäudewandseitigen Einbauraum eingefügt, der von einer wandeinbaubaren, d.h. einer zum Einbau in eine gebäudeseitige Wand eingerichteten, Installationsanschlussbox bereitgestellt ist. Typisch sind hierbei vor allem Unterputz-Ausführungen, bei denen die Installationsanschlussbox derart in eine Gebäudewand eingebaut wird, dass sie vorderseitig möglichst bündig mit der fertiggestellten Gebäudewandfläche, z.B. einer verputzten Wandfläche oder einer Fliesenwandfläche, abschließt. Es versteht sich, dass es sich bei der Wand sowohl um eine eigentliche Wand als auch um einen Boden oder eine Decke eines Zimmers oder Raums eines Gebäudes, z.B. im Sanitärfall speziell eines Badezimmers oder Duschraums oder einer Küche, handeln kann. Der Grundkörper des Funktionsblocks kann in Sanitäranwendungen an einen als Schnittstelle zwischen gebäudeseitigen Installationsanschlüssen und dem Funktionsblock fungierenden Anschlusskörper der Box anschließen und je nach Anwendungsfall mit benötigten Fluidkanälen versehen und mit benötigten Sanitärkomponenten bestückt sein, wie z.B. Mischventilen, Umstellventilen und Absperrventilen.

Zur Montage wird in solchen Ausführungen die Installationsanschlussbox vor kompletter Fertigstellung der Wandfläche in einer Einbauöffnung der noch unfertigen Wand angebracht, so dass sie mit einer Seitenwandung über eine Soll-Oberfläche der fertigen Wand vorsteht, wobei sich diese Soll-Oberfläche z.B. durch eine abschließende Verfliesung der Wand oder Aufbringen einer anderweitigen Sichtoberfläche der fertigen Wand definiert. Nach Fertigstellung der Wand wird ein eventuell noch aus der Wand vorstehender Teil der Seitenwandung der Box in Höhe der Oberfläche der fertigen Wand abgetrennt oder bis zur Oberfläche der fertigen Wand zurückgeschoben. Anschließend wird der Funktionsblock mit seinem Grundkörper in die Box eingefügt. Der Abdeckkörper ist am Grundkörper angebracht, vorzugsweise mittels einer Schraubverbindung, wobei der Abdeckkörper z.B. als Rosette mit Abdeckfunktion und/oder Trägerfunktion realisiert sein kann und vorzugsweise zur Wand verspannt befestigt wird, um eine Abdichtung bereitzustellen.

Die Installationsanschlussbox kann hierfür insbesondere als Unterputzbox ausgeführt sein und einen Boxgehäusekörper aufweisen, der mit einem Hülsenabschnitt einen Einbauraum zum Aufnehmen des Funktionsblocks bzw. von Einbaukomponenten wie Mischventilen, Umstellventilen und/oder Absperrventilen bereitstellt und an einem Basisabschnitt einen vorzugsweise ringförmigen Anschlusskörper aufnimmt, an den der in den Einbauraum eingefügte Funktionsblock anschließen kann. Installationsanschlussboxen dieser Art sind z.B. in den Offenlegungsschriften EP 3 885 499 A1 und EP 3 885 496 A1 und in der Patentschrift EP 3 568 530 B1 offenbart.

Der Erfindung liegt als technisches Problem die Bereitstellung einer Fluidsteuerventilvorrichtung der eingangs genannten Art, die sich zur zuverlässigen und funktionell vorteilhaften Verwendung in Einbausituationen mit unterschiedlichem, verfügbarem axialem Bauraum mit relativ geringem Montageaufwand eignet, sowie eines damit ausgerüsteten Funktionsblocks der eingangs genannten Art zugrunde.

Die Erfindung löst dieses Problem durch die Bereitstellung einer Fluidsteuerventilvorrichtung mit den Merkmalen des Anspruchs 1 und eines Funktionsblocks mit den Merkmalen des Anspruchs 10. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Bei der erfindungsgemäßen Fluidsteuerventilvorrichtung weist die Betätigungsvorrichtung eine Verlängerungsmechanik auf. Mit dieser Verlängerungsmechanik ist das nutzerbedienbare Bedienelement relativ zum Fluidsteuerventil axial höhenverstellbar. Das Maß an Höhenverstellbarkeit ist konstruktiv nicht beschränkt und kann sich nach dem Bedarf richten. In vielen Fällen genügt z.B. eine Höhenverstellbarkeit in einem Bereich von 0mm bis 50mm. Zudem ist bei der Fluidsteuerventilvorrichtung eine Verstellkraft für die Verlängerungsmechanik größer als eine Betätigungskraft für das Betätigungsglied. Das Drücken bzw. die Axialbetätigungsbewegung des Betätigungsglieds zur Betätigung des Fluidsteuerventils verlaufen mit der axialen Höhenverstellung auf einer gemeinsamen Längsachse. Da die Verstellkraft für die Verlängerungsmechanik größer ist als die Betätigungskraft für das Betätigungsglied, verbleibt die Verlängerungsmechanik in ihrer eingestellten Höhe, wenn der Bediener das Fluidsteuerventil über das Bedienelement betätigt.

Die Fluidsteuerventilvorrichtung eignet sich z.B. als sanitäre Fluidsteuerventilvorrichtung, wie als sanitäre Absperrventilvorrichtung, insbesondere zur Verwendung in einem Funktionsblock zum Einbau in eine sanitäre, wandeingebaute Installationsanschlussbox. Aufgrund der Eigenschaften dieser Fluidsteuerventilvorrichtung kann im Montagefall die Betätigungsvorrichtung mittels der Verlängerungsmechanik bis zu einer gewünschten axialen Höhe relativ zu dem Ventil ausgezogen bzw. ausgefahren werden, vorzugsweise in einer geradlinigen axialen Ausziehbewegung. Die Verlängerungsmechanik lässt sich auf Wunsch problemlos derart ausführen, dass für ihre Verstellung kein Werkzeug oder dgl. benötigt wird.

Ist beispielsweise die Fluidsteuerventilvorrichtung in einem Grundkörper eines Funktionsblocks aufgenommen, der in eine wandeingebaute Installationsanschlussbox eingesetzt wird, kann für die Montage des Funktionsblocks die Betätigungsvorrichtung zunächst bis zu einer gewünschten, vorzugsweise maximalen, axialen Höhe relativ zu dem Ventil ausgefahren sein, so dass das nutzerbedienbare Bedienelement über seine spätere, gewünschte Soll-Höhenlage, insbesondere relativ zu einer Soll-Oberfläche der fertigen Wand, aus der Installationsanschlussbox vorsteht. Dabei kann ein Abdeckkörper des Funktionsblocks, z.B. eine Rosette mit Abdeckfunktion und/oder Trägerfunktion, an der Betätigungsvorrichtung im Bereich des Bedienelements angebracht sein, wobei das Bedienelement mit einem definierten Abstand von einer Vorderseite des Abdeckkörpers vorsteht, d.h. in Richtung des Bedieners. Nach Fixierung des Grundkörpers an der Box kann das Bedienelement zusammen mit dem Abdeckkörper mittels der Verlängerungsmechanik bis zur gewünschten axialen Höhe bzw. Tiefe in den Grundkörper eingeschoben bzw. eingefahren werden, insbesondere bis der Abdeckkörper mit einer Rückseite gegen die Soll-Oberfläche der fertigen Wand in einer Endposition anliegt, wobei ggf. zunächst das Betätigungsglied in seine axial eingefahrene Stellung gedrückt und dann die Verlängerungsmechanik sich verkürzend zusammengeschoben wird. Danach wird der Abdeckkörper festgelegt, d.h. in seiner axialen Höhe fixiert.

Wenn während dieser Montagebewegung des Abdeckkörpers in Richtung Wand das Betätigungsglied des Ventils in seine axial eingefahrene Stellung gedrückt wird, kann es in den meisten Fällen zweckmäßig sein, das Betätigungsglied nach Abschluss dieser Abdeckkörpermontage wieder in seine vorgerückte, ausgefahrene Stellung zurückzubringen, in die es im normalen Ventilbetrieb vorzugsweise selbsttätig z.B. unter Verwendung eines federelastischen Rückstellelements gelangt. Um dies zu ermöglichen, drückt der Monteur das Bedienelement unter Überwindung der Verstellkraft für die Verlängerungsmechanik in seine axial eingedrückte Stellung, wodurch sich die Verlängerungsmechanik um den Axialhub des Bedienelements bzw. des Betätigungsglieds verkürzt. Wenn der Monteur nun das Bedienelement loslässt, kann das Betätigungsglied wie im normalen Ventilbetrieb selbsttätig wieder in seine ausgefahrene Stellung axial vorbewegt werden, z.B. durch die Rückstellkraft des zugehörigen Rückstellelements, wobei die Verlängerungsmechanik die axiale Ausfahrbewegung des Betätigungsglieds auf das Bedienelement übertragen kann. Das nutzerbedienbare Bedienelement weist dann den gewünschten, definierten Abstand von der Vorderseite des Abdeckkörpers bzw. von der Soll-Oberfläche der fertigen Wand auf.

Folglich kann die Fluidsteuerventilvorrichtung bzw. das nutzerbedienbare Bedienelement der Fluidsteuerventilvorrichtung zügig, vorzugsweise werkzeuglos, und ohne Beeinträchtigung seiner Funktionalität in der axialen Höhe an vorgegebene Installationsgegebenheiten angepasst werden, ohne dass hierfür eine Vermessung der Installation oder ein Ablängen von Bauteilen zum Längenausgleich notwendig ist. Dies minimiert den damit einhergehenden Montageaufwand.

In einer Weiterbildung der Erfindung ist das Bedienelement relativ zum Fluidsteuerventil stufenlos höhenverstellbar. Dies ermöglicht, die Betätigungsvorrichtung und damit das nutzerbedienbare Bedienelement mit einer einfachen axialen Bewegung zügig und exakt in jede beliebige, gewünschte axiale Höhe auszufahren und/oder einzufahren. In alternativen Ausführungen ist das Bedienelement in Stufen höhenverstellbar, z.B. mittels einer Rastvorrichtung, welche in definierten Abständen mehrere Raststellungen für die Verlängerungsmechanik bereitstellt.

In einer Weiterbildung der Erfindung ist die Verlängerungsmechanik als eine Teleskopmechanik ausgebildet. Dadurch ist es möglich, die Betätigungsvorrichtung und damit das nutzerbedienbare Bedienelement mit einer einfachen axialen Bewegung zügig in die gewünschte axiale Höhe auszufahren und/oder einzufahren. Die Teleskopmechanik kann z.B. einen an sich üblichen Teleskopaufbau aus mindestens zwei koaxial ineinander liegenden Körpern aufweisen, die bis zu einer bestimmten, maximalen Länge bzw. Höhe ausgefahren und wieder eingefahren werden können. In einer funktionell und konstruktiv vorteilhaften Ausführung weist die Teleskopmechanik zwei koaxial ineinander liegende Körper auf. Die Teleskopmechanik verbleibt in der eingestellten Höhe, wenn der Bediener zur Betätigung des Ventils die dafür erforderliche Betätigungskraft auf sie ausübt. Dies kann beispielsweise durch eine Arretierung oder eine Verklemmung der mindestens zwei Körper untereinander oder einen Kraft-/Reibschluss bewerkstelligt werden. Im Gegensatz dazu ist die Höhe der Teleskopmechanik verstellbar, wenn der Bediener zumindest die dafür erforderliche Verstellkraft auf sie ausgeübt, welche größer als die oben genannte Betätigungskraft ist. In alternativen Ausführungen ist die Verlängerungsmechanik z.B. als eine arretierbare Schraubmechanik oder als eine axial verlängernde, arretierbare Hebel-/Scherenmechanik ausgebildet.

In einer Weiterbildung der Erfindung weist die Verlängerungsmechanik zwei axial gegeneinander verschiebbare Verlängerungselemente auf. Von den Verlängerungselementen ist ein erstes, dem Betätigungsglied zugewandtes Verlängerungselement an das Betätigungsglied angekoppelt und ein zweites, dem Betätigungsglied abgewandtes Verlängerungselement ist das Bedienelement. Dies stellt eine konstruktiv und funktionell vorteilhafte Realisierung für das axiale Verstellen der Verlängerungsmechanik dar. Alternativ ist das zweite Verlängerungselement an das Bedienelement angekoppelt. Das erste Verlängerungselement ist vorzugsweise lösbar mittels einer Schraubverbindung an das Betätigungsglied angekoppelt. Das Bedienelement kann z.B. eine Drucktaste sein oder mit dieser gekoppelt sein. In einer entsprechenden Ausführung weist die Verlängerungsmechanik mehr als zwei axial gegeneinander verschiebbare Verlängerungselemente auf.

In einer Ausgestaltung der Erfindung ist das zweite Verlängerungselement an einer Außenseite des ersten Verlängerungselements translationsbeweglich geführt. Dies stellt eine konstruktiv und funktionell vorteilhafte Realisierung der Verlängerungsmechanik dar und minimiert zudem den für die Verlängerungsmechanik vorgesehenen Bauraum, insbesondere in einer axialen Richtung. Das zweite Verlängerungselement ist vorzugsweise dafür ausgebildet, das Fluidsteuerventil umfangsseitig zu umgeben, insbesondere in einem eingezogenen bzw. eingefahrenen Zustand der Verlängerungsmechanik. Alternativ ist das zweite Verlängerungselement an einer Innenseite des ersten Verlängerungselements translationsbeweglich geführt.

In einer Ausgestaltung der Erfindung weist das zweite Verlängerungselement an einer Innenseite mindestens eine Führungsnut auf und das erste Verlängerungselement weist an einer Außenseite zu jeder Führungsnut ein in die Führungsnut eingreifendes Führungsglied auf, wobei das Führungsglied eine zu einer Kontur der Führungsnut korrespondierende Kontur aufweist. Dies stellt eine konstruktiv und funktionell vorteilhafte Realisierung der Verlängerungsmechanik dar, wobei die Verlängerungselemente bei Bedarf im Wesentlichen spielfrei und drehfest ineinanderpassen können. Die Führungsnut weist vorzugsweise an einem dem Betätigungsglied zugewandten Stirnendbereich des zweiten Verlängerungselements eine Ausführöffnung zum Einführen bzw. zum Herausführen des ersten Verlängerungselements auf.

In einer Ausgestaltung der Erfindung weist das zweite Verlängerungselement an zwei gegenüberliegenden Innenseiten je eine Führungsnut auf und das erste Verlängerungselement weist auf zwei voneinander abgewandten Außenseiten je ein Führungsglied auf. Dies stellt eine weitere konstruktiv und funktionell vorteilhafte der Verlängerungsmechanik dar, insbesondere eine verbesserte Führungscharakteristik. Das zweite Verlängerungselement ist vorzugsweise U-förmig ausgebildet, mit einer dem Betätigungsglied zugewandten Öffnung. In alternativen Ausführungen weist das zweite Verlängerungselement mehr als zwei Führungsnuten auf und das erste Verlängerungselement weist entsprechend mehr als zwei Führungsglieder auf.

In einer Ausgestaltung der Erfindung weist das erste Verlängerungselement an seiner Außenseite ein Koppelelement aus einem Weichmaterial auf, wobei das Koppelelement reibschlüssig gegen eine Innenseite des zweiten Verlängerungselement derart anliegt, dass eine Haftreibungskraft zwischen den Verlängerungselementen größer ist als die Betätigungskraft für das Betätigungsglied. Dies stellt eine weitere konstruktiv und funktionell vorteilhafte der Verlängerungsmechanik dar, indem durch diesen Kraft-/Reibschluss zwischen den beiden Verlängerungselementen die Verlängerungsmechanik in der eingestellten Höhe verbleibt, wenn der Bediener zur Betätigung des Ventils die dafür erforderliche Betätigungskraft auf sie ausübt. Dabei entspricht die Haftreibungskraft zwischen den Verlängerungselementen im Wesentlichen der Verstellkraft für die Verlängerungsmechanik. Das Weichmaterial ist vorzugsweise aus einem elastomeren Kunststoff. In alternativen Ausführungen wird ein Form- und/oder Kraftschluss zwischen den beiden Verlängerungselementen durch eine Arretierung oder eine Verklemmung der beiden Verlängerungselementen untereinander bewerkstelligt.

In einer Weiterbildung der Erfindung weist die Fluidsteuerventilvorrichtung ein Rückstellelement auf, welches zwischen dem Fluidsteuerventil und der Verlängerungsmechanik angeordnet ist und auf die Verlängerungsmechanik und das Betätigungsglied in einer Schaltposition eine Rückstellkraft in Richtung einer Ausgangsposition ausübt, wobei die Schaltposition eine gegenüber der Ausgangsposition eingefahrene Stellung des Betätigungsglieds ist. Durch das Drücken des nutzerbedienbaren Bedienelements werden die Betätigungsvorrichtung bzw. die Verlängerungsmechanik und das Betätigungsglied von der Ausgangsposition in die Schaltposition eingefahren, so dass das Fluidsteuerventil betätigt wird. Sobald der Bediener keine Kraft mehr auf das Bedienelement ausübt, werden durch die Rückstellkraft des Rückstellelements die Verlängerungsmechanik und das Betätigungsglied wieder zurück in die Ausgangsposition ausgefahren. Dabei wird das Fluidsteuerventil nicht nochmals betätigt. Durch das Rückstellelement wird zudem sichergestellt, dass in einem schaltfreien Zustand keine Kraft auf das Betätigungsglied wirkt, wie z.B. durch die Betätigungsvorrichtung bzw. die Verlängerungsmechanik selbst, wodurch ein unbeabsichtigtes Betätigen des Fluidsteuerventils verhindert wird. Das Rückstellelement ist vorzugsweise zwischen dem Fluidsteuerventil und dem ersten Verlängerungselement angeordnet. In einer alternativen Ausführung werden die Verlängerungsmechanik und das Betätigungsglied nicht selbstständig von der Schaltposition wieder in die Ausgangsposition ausgefahren, sondern mittels einer Rückstellkraft durch den Bediener.

Der erfindungsgemäße Funktionsblock beinhaltet die erfindungsgemäße Fluidsteuerventilvorrichtung. Dabei ist das Fluidsteuerventil der Fluidsteuerventilvorrichtung am Grundkörper angeordnet und die Betätigungsvorrichtung der Fluidsteuerventilvorrichtung ist am Abdeckkörper oder zwischen dem Grundkörper und dem Abdeckkörper angeordnet. Der Funktionsblock ist insbesondere auch mit seinem Grundkörper konstruktiv einfach für die Verwendung in Einbausituationen mit unterschiedlich verfügbarem Bauraum anpassbar bzw. in diesen einbringbar. Zudem dient der Grundkörper als Träger der Fluidsteuerventilvorrichtung und ermöglicht dadurch eine sichere und einfache Positionierung der Fluidsteuerventilvorrichtung im vorgesehenen Bauraum. Neben einer Abdeck- und/oder Schutzfunktion kann der Abdeckkörper zusätzlich eine Abdichtfunktion aufweisen und abdichtend gegen eine Oberfläche einer Wand z.B. eines Duschraums oder Badezimmers etc. anliegen. Dabei kann der Abdeckkörper zur Wand verspannt befestigt sein.

Dies ist typischerweise für wandeinbaubare Installationsanschlussboxen gewünscht, bei denen die Box in eine Öffnung bzw. Aufnahme einer gebäudeseitigen Wand, zu der gebäudeseitige sanitäre Installationsanschlüsse geführt sind, eingesetzt wird und nach Fertigstellen der Wand der Funktionsblock mit seinem Grundkörper in einen von der Box bereitgestellten Einbauraum eingefügt und der Abdeckkörper gegen die Wand zur Anlage gebracht wird. Je nach der Wanddicke bzw. eines beim Fertigstellen der Wand angebrachten Wandoberflächenbelags, z.B. einer Putzschicht und/oder einer Fliesenschicht, variiert der axiale Abstand bzw. die axiale Höhenlage der fertigen Wandoberfläche und damit des Abdeckkörpers zum in die Wandöffnung eingesetzten Grundkörper und damit auch zu der am Grundkörper gehaltenen Fluidsteuerventilvorrichtung. Dem trägt die erfindungsgemäße Fluidsteuerventilvorrichtung Rechnung, indem sie mittels der Verlängerungsmechanik der Betätigungsvorrichtung eine Befestigung des Abdeckkörpers am Grundkörper mit variabler axialer Höhe ermöglicht und dadurch auch bei variierender Wanddicke und/oder Einbautiefe des Grundkörpers stets für eine zuverlässige Endlage des Abdeckkörpers anliegend an die Wandoberfläche sorgt. Zur Montage wird nach Einfügen des Grundkörpers in die Wandöffnung bzw. die Boxöffnung und dem Festlegen des Grundkörpers an der Wand bzw. der Box der Abdeckkörper in Richtung Wand geschoben, bis er gegen diese zur Anlage kommt und sich spielfrei und ggf., d.h. bei vorhandener Dichtung, abdichtend gegen eine Oberfläche der gebäudeseitigen Wand anlegt.

In einer Weiterbildung der Erfindung ist der Abdeckkörper gegenüber dem Grundkörper axial höhenverstellbar. Dies ermöglicht im Montagefall eine Anpassung der axialen Höhe des Abdeckkörpers je nach Wanddicke bzw. Einbautiefe, vorzugsweise ohne dass dafür ein Werkzeug oder dgl. benötigt wird. Die axiale Höhenverstellbarkeit des Abdeckkörpers erfolgt vorzugsweise unter Zuhilfenahme der Verlängerungsmechanik der Fluidsteuerventilvorrichtung. Dies stellt eine funktionell und konstruktiv vorteilhafte Realisierung dar, denn dadurch ist eine Höhenanpassung der Fluidsteuerventilvorrichtung bzw. des nutzerbedienbaren Bedienelements und des Abdeckkörpers in einem gemeinsam Montageschritt möglich, was den damit einhergehenden Montageaufwand minimiert. In entsprechenden Ausführungen kann der Abdeckkörper mit einer separaten Verlängerungsmechanik gegenüber dem Grundkörper höhenverstellbar festgelegt werden, z.B. durch eine arretierbare Schraubmechanik.

In einer Weiterbildung der Erfindung weist der Abdeckkörper einen Betätigungsbereich mit einer Betätigungsöffnung für das Bedienelement auf. Dies stellt eine konstruktiv und funktionell vorteilhafte Realisierung des Abdeckkörpers dar. Die Betätigungsöffnung ermöglicht entweder durch diese das Bedienelement zu betätigen, z.B. mittels einer Betätigungstaste, wenn diese an einer Rückseite des Abdeckkörpers angeordnet ist, oder das Durchstecken des Bedienelements durch den betreffenden Betätigungsbereich des Abdeckkörpers hindurch, so dass das Bedienelement vom Abdeckkörper vorsteht und nutzerseitig bequem bedienbar ist. Dabei kann der Abdeckkörper auf Wunsch die bereits erwähnte Abdichtfunktion gegenüber einer angrenzenden Wandfläche erfüllen. Alternativ kann der Abdeckkörper mehrteilig ausgeführt sein und/oder das oder die Bedienelemente umgeben.

In einer Weiterbildung der Erfindung ist das Bedienelement zur Betätigung des Fluidsteuerventils mit einer an einer Frontseite des Abdeckkörpers angeordneten Betätigungstaste gekoppelt. Diese Realisierung ermöglicht eine bedienfreundliche und auch unter gestalterischen Gesichtspunkten vorteilhafte Betätigung des Fluidsteuerventils über die Betätigungstaste.

In einer Weiterbildung der Erfindung ist der Funktionsblock ein solcher zum Einbau in eine wandeingebaute sanitäre Installationsanschlussbox. Dies stellt vorteilhafte Anwendungsfälle des erfindungsgemäßen Funktionsblocks dar. In der Sanitäranwendung dient der Funktionsblock als ein sanitärer Funktionsblock beispielsweise in an sich bekannter Weise zum Anschluss einer Sanitärarmatur, wie einer Wasserauslaufarmatur, einer Mischerarmatur oder dgl., an gebäudeseitig vorhandene Wasseranschlussrohre.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine perspektivische Explosionsansicht einer Fluidsteuerventilvorrichtung mit einem Fluidsteuerventil mit einem translationsbeweglichen Betätigungsglied und einer Betätigungsvorrichtung mit Verlängerungsmechanik,
- Fig. 2: ausschnittweise eine perspektivische Explosionsansicht hier interessierender Teile eines Funktionsblocks mit der Fluidsteuerventilvorrichtung von Fig. 1, einem Grundkörper, einem Abdeckkörper und einer Bedientaste,
- Fig. 3: eine Seitenansicht der Komponenten von Fig. 2 mit einer mittleren Höheneinstellung der Verlängerungsmechanik,
- Fig. 4: ausschnittweise eine Schnittansicht längs einer Linie IV-IV in Fig. 3,
- Fig. 5: eine Schnittansicht längs einer Linie V-V in Fig. 4,
- Fig. 6: die Schnittansicht von Fig. 5 mit einer minimalen Höheneinstellung der Verlängerungsmechanik,
- Fig. 7: die Schnittansicht von Fig. 5 mit einer maximalen Höheneinstellung der Verlängerungsmechanik,
- Fig. 8: eine Perspektivansicht eines ersten, dem Betätigungsglied zugewandten Verlängerungselements der Verlängerungsmechanik,
- Fig. 9: eine Perspektivansicht eines zweiten, dem Betätigungsglied abgewandten Verlängerungselements der Verlängerungsmechanik,
- Fig. 10: eine Perspektivansicht der Verlängerungsmechanik mit den beiden Verlängerungselementen in der maximalen Höheneinstellung,
- Fig. 11: eine Schnittansicht längs einer Linie XI-XI in Fig. 10,
- Fig. 12: die Schnittansicht von Fig. 11 in der minimalen Höheneinstellung der Verlängerungsmechanik, und
- Fig. 13: eine Perspektivansicht des Funktionsblocks von Fig. 2 mit einer auf den Abdeckkörper aufgesetzten Bedienoberfläche.

Wie in den Figuren anhand einer exemplarischen Ausführung veranschaulicht ist, weist die erfindungsgemäße Fluidsteuerventilvorrichtung ein Fluidsteuerventil 1 mit einem translationsbeweglichen Betätigungsglied 2 und eine Betätigungsvorrichtung 3 mit einem nutzerbedienbaren Bedienelement 4 auf. Das nutzerbedienbare Bedienelement 4 ist zur Betätigung des Fluidsteuerventils 1 mit dem Betätigungsglied 2 gekoppelt, insbesondere translationsgekoppelt. Bei der Fluidsteuerventilvorrichtung kann es sich beispielsweise um eine Absperrventilvorrichtung und somit bei dem Fluidsteuerventil 1 um ein Absperrventil handeln. Alternativ kann das Fluidsteuerventil 1 ein Thermostat-, Misch- oder Umstellventil sein. Das gezeigte Fluidsteuerventil 1 ist von einer herkömmlichen Bauart mit einem kartuschenförmigen Gehäuse, was hier keiner weiteren Erläuterungen bedarf. Die Fluidsteuerventilvorrichtung ist insbesondere als eine sanitäre Fluidsteuerventilvorrichtung verwendbar.

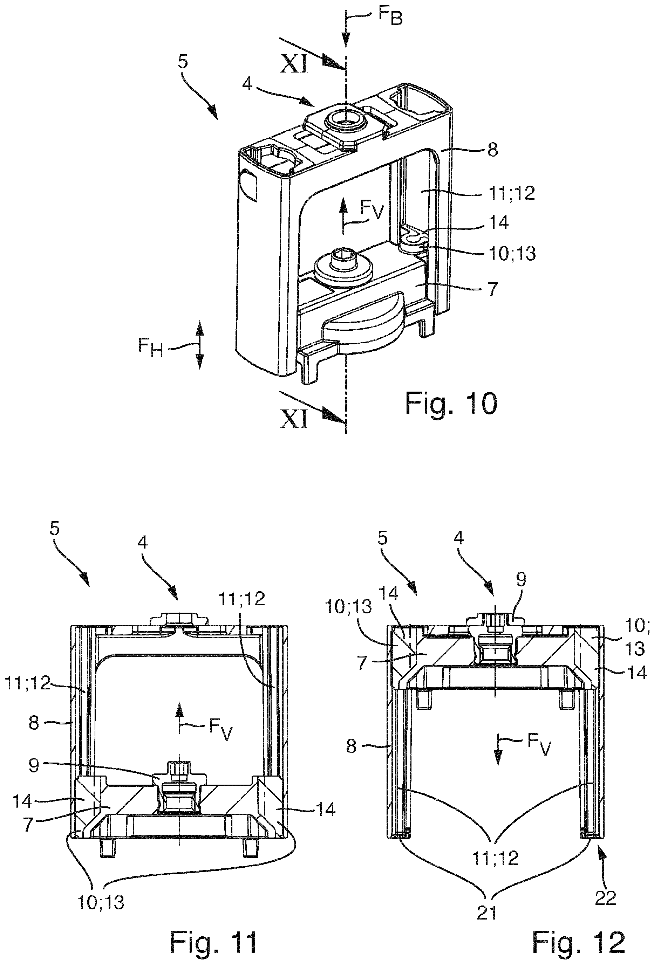

Die Betätigungsvorrichtung 3 weist eine Verlängerungsmechanik 5 auf, mit der das Bedienelement 4 relativ zum Fluidsteuerventil 1 axial höhenverstellbar ist, wie in den Fig. 11 und 12 gezeigt ist. Das Maß an Höhenverstellbarkeit kann sich nach dem Bedarf richten. Bei der gezeigten Ausführung ist eine Höhenverstellbarkeit in einem Bereich von 0mm bis 50mm möglich. Dies ermöglicht es insbesondere im Montagefall, die Betätigungsvorrichtung 3 in einer gewünschten axialen Höhe einzustellen. Wenn die Verlängerungsmechanik 5, wie in dem gezeigten Beispiel, werkzeuglos betätigbar ausgeführt ist, kann die axiale Höheneinstellung ohne ein Werkzeug erfolgen. Dabei ist eine Verstellkraft Fv für die Verlängerungsmechanik 5 größer als eine Betätigungskraft F_{B} für das Betätigungsglied 2, wie insbesondere in der Fig. 10 dargestellt ist.

Die Fluidsteuerventilvorrichtung kann wie in der gezeigten Ausführung ein einziges Fluidsteuerventil 1 aufweisen. Bei nicht gezeigten Ausführungen weist die Fluidsteuerventilvorrichtung mehr als ein Ventil auf, wobei das mindestes eine weitere Ventil ein Thermostat-, Misch-, Umstell- und/oder Absperrventil sein kann.

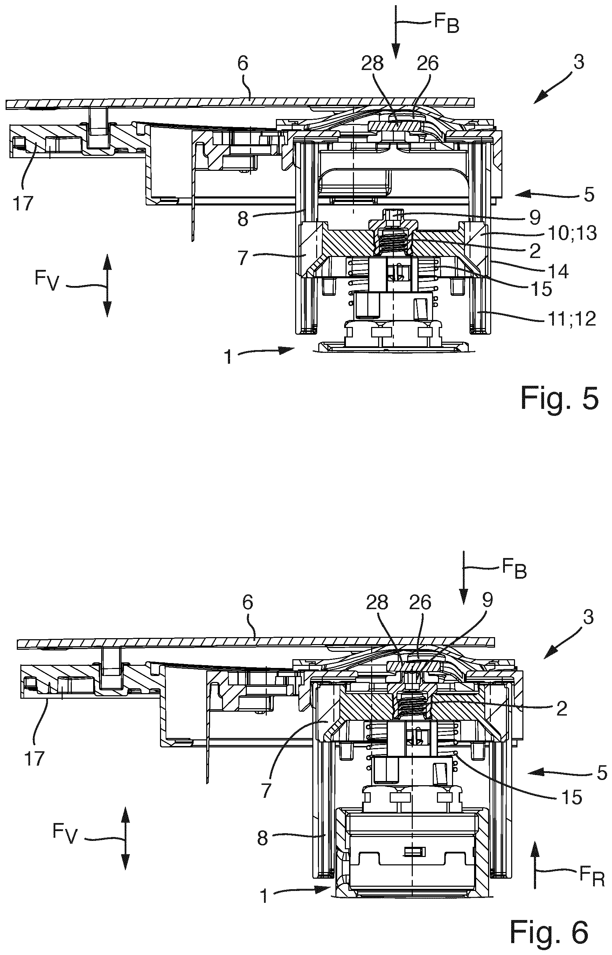

In vorteilhaften Ausführungen ist das Bedienelement 4 relativ zum Fluidsteuerventil 1 stufenlos höhenverstellbar, wie dies insbesondere in den Fig. 5 bis 7 dargestellt ist. Bei nicht gezeigten Ausführungen ist das Bedienelement 4 in Stufen höhenverstellbar, z.B. mittels einer Rastvorrichtung, welche in definierten Abständen mehrere Raststellungen für die Verlängerungsmechanik 5 bereitstellt.

In einer konstruktiv vorteilhaften Ausführung ist die Verlängerungsmechanik 5 als eine Teleskopmechanik ausgebildet ist, wie insbesondere in der Fig. 10 dargestellt ist. Mit der Teleskopmechanik ist die Betätigungsvorrichtung 3 und damit das nutzerbedienbare Bedienelement 4 mit einer einfachen axialen Bewegung zügig in die gewünschte axiale Höhe ausfahrbar und/oder einfahrbar. Die Teleskopmechanik weist in dem gezeigten Beispiel einen an sich üblichen Teleskopaufbau aus mindestens zwei koaxial ineinander liegenden Körpern 7, 8 auf, die bis zu einer bestimmten, maximalen Länge bzw. Höhe geradlinig ausgefahren und wieder eingefahren werden können. Bei dem in den Figuren gezeigten Beispiel weist die Verlängerungsmechanik 5 genau zwei koaxial ineinander liegende Körper 7, 8 auf.

Die Teleskopmechanik verbleibt in der eingestellten Höhe, wenn ein Bediener zur Betätigung des Fluidsteuerventils 1 die dafür erforderliche Betätigungskraft F_{B} auf sie ausübt. Dies kann beispielsweise durch eine Arretierung oder eine Verklemmung der mindestens zwei Körper 7, 8 untereinander oder einen Kraft-/Reibschluss zwischen den mindestens zwei Körpern 7, 8 bewerkstelligt werden. Im Gegensatz dazu ist die Höhe der Teleskopmechanik verstellbar, wenn der Bediener zumindest die dafür erforderliche Verstellkraft Fv auf sie ausgeübt, welche größer als die oben genannte Betätigungskraft F_{B} ist.

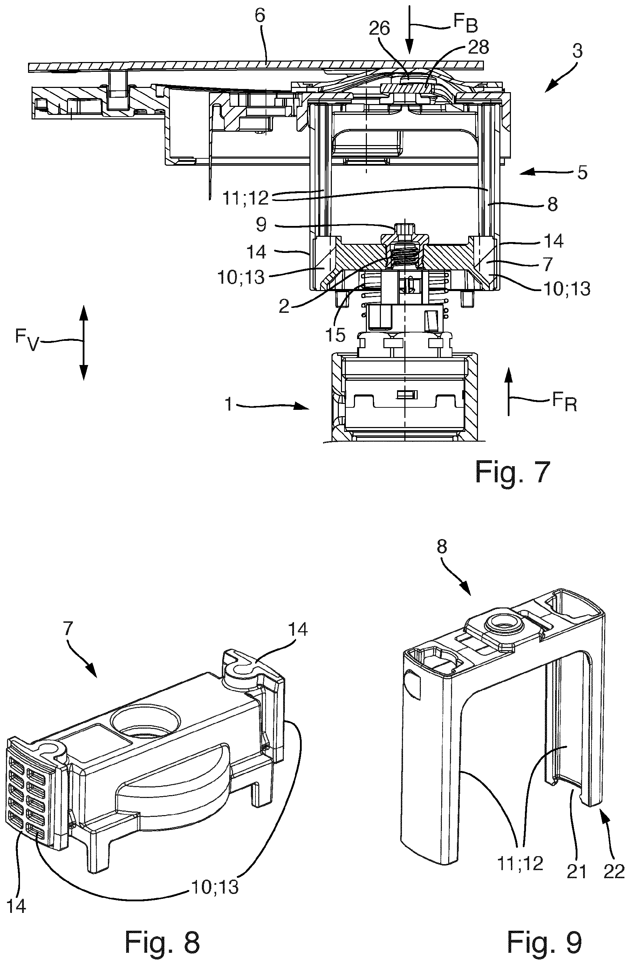

Die mindestens zwei Körper 7, 8 sind vorzugsweise drehfest miteinander verbunden und/oder passen im Wesentlichen spielfrei und axialbeweglich ineinander, wie z.B. in den Fig. 8 bis 12 ersichtlich ist.

Bei einer nicht gezeigten Ausführung ist die Verlängerungsmechanik 5 z.B. als eine arretierbare Schraubmechanik oder als eine axial verlängernde Hebel-/Scherenmechanik ausgebildet sein.

In vorteilhaften Ausführungsformen weist die Verlängerungsmechanik 5 zwei axial gegeneinander verschiebbare Körper bzw. Verlängerungselemente 7, 8 auf, von denen ein erstes, dem Betätigungsglied 2 zugewandtes Verlängerungselement 7 an das Betätigungsglied 2 angekoppelt ist und ein zweites, dem Betätigungsglied 2 abgewandtes Verlängerungselement 8 das Bedienelement 4 ist oder an dieses angekoppelt ist, wie in der Fig. 7 dargestellt ist. Das Bedienelement 4 kann z.B. eine Drucktaste sein oder mit dieser gekoppelt sein.

In der gezeigten Ausführung ist das erste Verlängerungselement 7 an das Betätigungsglied 2 lösbar mittels einer Schraubverbindung 9 angekoppelt, wie insbesondere in der Fig. 7 gezeigt ist.

Im gezeigten Beispiel weist die Verlängerungsmechanik 5 genau die zwei erwähnten, axial gegeneinander verschiebbaren Verlängerungselemente 7, 8 auf. Bei einer nicht gezeigten Ausführung weist die Verlängerungsmechanik 7 mehr als zwei axial gegeneinander verschiebbare Verlängerungselemente auf.

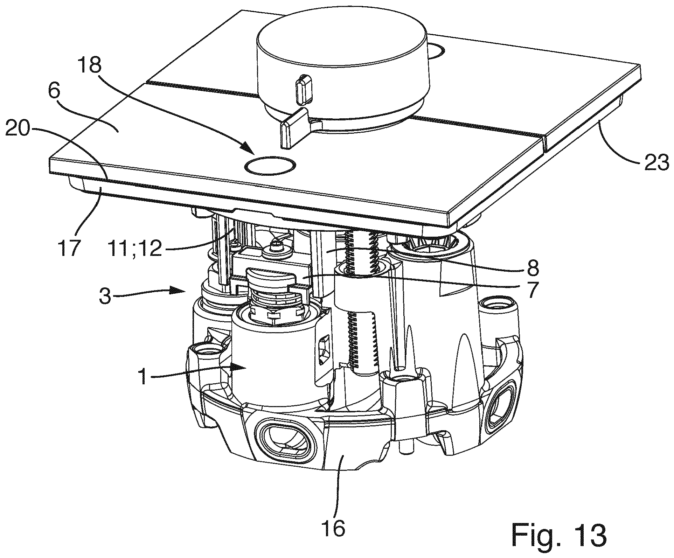

In einer konstruktiv vorteilhaften Ausführung ist das zweite Verlängerungselement 8 an einer Außenseite 10 des ersten Verlängerungselements 7 translationsbeweglich geführt, wie insbesondere in der Fig. 10 gezeigt ist. Das zweite Verlängerungselement 8 ist vorzugsweise dafür ausgebildet, das Fluidsteuerventil 1 umfangsseitig zu umgeben, insbesondere in einem eingezogenen bzw. eingefahrenen Zustand der Verlängerungsmechanik 5, wie dies in den Fig. 6 und 13 gezeigt ist. Bei einer nicht gezeigten Ausführung ist das zweite Verlängerungselement 8 an einer Innenseite des ersten Verlängerungselements 7 translationsbeweglich geführt.

In vorteilhaften Ausführungsformen weist das zweite Verlängerungselement 8 an einer Innenseite 11 mindestens eine Führungsnut 12 auf und das erste Verlängerungselement 7 weist an einer Außenseite 10 zu jeder Führungsnut 12 ein in die Führungsnut 12 eingreifendes Führungsglied 13 auf, wobei das Führungsglied 13 eine zu einer Kontur der Führungsnut 12 korrespondierende Kontur aufweist, wie insbesondere die Fig. 10 zeigt. Die Führungsnut 12 weist vorzugsweise an einem dem Betätigungsglied 2 zugewandten Stirnendbereich 22 des zweiten Verlängerungselements 8 eine Ausführöffnung 21 zum Einführen bzw. zum Herausführen des ersten Verlängerungselements 7 auf, wie insbesondere in den Fig. 9 und 12 dargestellt ist.

In einer vorteilhaften Realisierung weist das zweite Verlängerungselement 8 an zwei gegenüberliegenden Innenseiten 11 je eine Führungsnut 12 auf und das erste Verlängerungselement 7 weist auf zwei voneinander abgewandten Außenseiten 10 je ein Führungsglied 13 auf, wie insbesondere in den Fig. 8 und 9 dargestellt ist.

In dem gezeigten Beispiel ist das zweite Verlängerungselement 8 vorzugsweise U-förmig ausgebildet, mit einer dem Betätigungsglied 2 zugewandten Öffnung bzw. offenen U-Seite und den Führungsnuten an den U-Flanken.

In vorteilhaften Ausführungsformen weist das erste Verlängerungselement 7, wie im gezeigten Beispiel, an seiner Außenseite 10 ein Koppelelement 14 aus einem Weichmaterial auf, wobei das Koppelelement 14 reibschlüssig gegen eine Innenseite 11 des zweiten Verlängerungselement 8 derart anliegt, dass eine Haftreibungskraft F_{H} zwischen den Verlängerungselementen 7, 8 größer ist als die Betätigungskraft F_{B} für das Betätigungsglied 2. Die Haftreibungskraft F_{H} zwischen den Verlängerungselementen 7, 8 entspricht im Wesentlichen der Verstellkraft Fv für die Verlängerungsmechanik 5. Das Weichmaterial des Koppelelements 14 ist vorzugsweise aus einem elastomeren Kunststoff. Im gezeigten Beispiel ist das Koppelelement 14 an einem den restlichen Teil des ersten Verlängerungselements 7 bildenden Basiskörper aus einem Hartmaterial z.B. aus Kunststoff oder Metall fixiert.

Bei einer nicht gezeigten Ausführung wird ein Form- und/oder Kraftschluss zwischen den beiden Verlängerungselementen 7, 8 durch eine Arretierung oder eine Verklemmung der beiden Verlängerungselementen 7, 8 untereinander bewerkstelligt.

In einer konstruktiv vorteilhaften Ausführung weist die Fluidsteuerventilvorrichtung ein Rückstellelement 15 auf, welches zwischen dem Fluidsteuerventil 1 und der Verlängerungsmechanik 5 angeordnet ist und auf die Verlängerungsmechanik 5 und das Betätigungsglied 2 in einer Schaltposition eine Rückstellkraft F_{R} in Richtung einer Ausgangsposition ausübt, wobei die Schaltposition eine gegenüber der Ausgangsposition eingefahrene Stellung des Betätigungsglieds 2 ist, wie in der Fig. 6 gezeigt ist.

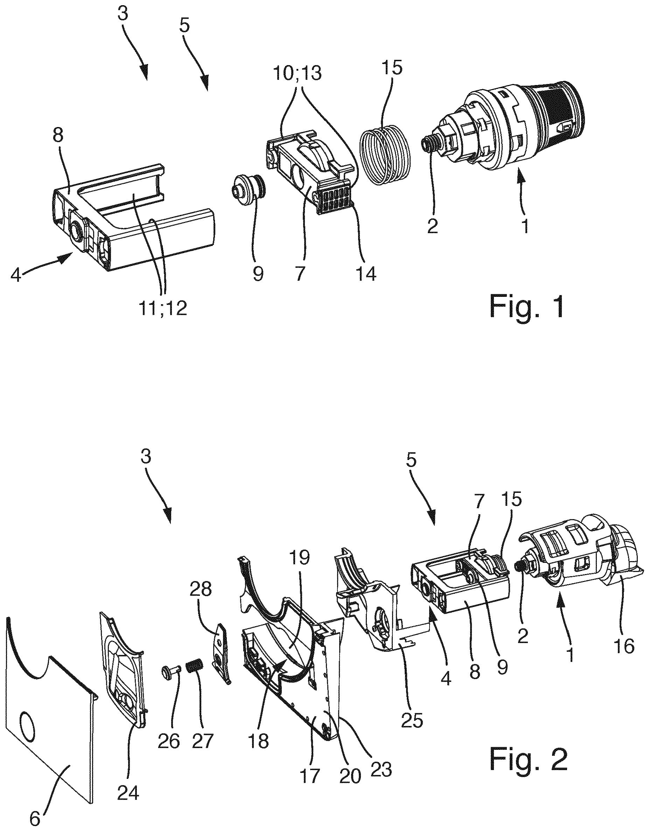

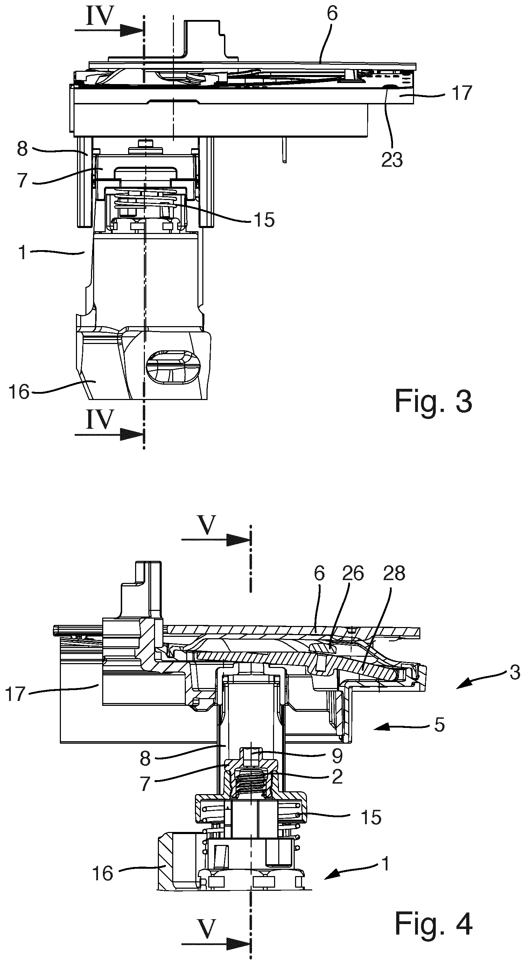

Die Fig. 2 bis 7 und 13 veranschaulichen einen insbesondere als sanitären Funktionsblock verwendbaren Funktionsblock in seinem vorliegend interessierenden Bereich. Der Funktionsblock beinhaltet einen Grundkörper 16, einen Abdeckkörper 17 und die vorbeschriebene erfindungsgemäße Fluidsteuerventilvorrichtung. Dabei ist das Fluidsteuerventil 1 der Fluidsteuerventilvorrichtung am Grundkörper 16 angeordnet und die Betätigungsvorrichtung 3 der Fluidsteuerventilvorrichtung ist am Abdeckkörper 17 oder zwischen dem Grundkörper 16 und dem Abdeckkörper 17 angeordnet.

Der Grundkörper 16 dient typischerweise zum Aufnehmen von sanitären Schnittstellenkomponenten zwischen gebäudeseitigen Wasserinstallationsanschlüssen und benutzerzugänglichen Sanitärarmaturen, wie Auslaufarmaturen, Duschschläuchen bzw. Duschköpfen etc. Bei dem erfindungsgemäßen Funktionsblock ist zumindest die erfindungsgemäße Fluidsteuerventilvorrichtung vom Grundkörper 16 aufgenommen.

Der Funktionsblock ist vorzugsweise zum Einbau in eine wandeingebaute Installationsanschlussbox eingerichtet.

In einer vorteilhaften Realisierung ist der Abdeckkörper 17 gegenüber dem Grundkörper 16 axial höhenverstellbar. Die axiale Höhenverstellbarkeit des Abdeckkörpers 17 erfolgt bei der gezeigten Ausführung vorzugsweise unter Zuhilfenahme der Verlängerungsmechanik 5 der Fluidsteuerventilvorrichtung. Bei einer nicht gezeigten Ausführung ist der Abdeckkörper 17 mit einer separaten Verlängerungsmechanik gegenüber dem Grundkörper 16 höhenverstellbar am Grundkörper 16 festlegbar, z.B. durch eine arretierbare Schraubmechanik.

In entsprechenden Ausführungen weist der Abdeckkörper 17 einen Betätigungsbereich 18 mit einer Betätigungsöffnung 19 für das Bedienelement 4 auf. Die Betätigungsöffnung 19 ermöglicht entweder durch diese hindurch das Bedienelement 4 zu betätigen, z.B. mittels einer als Benutzerschnittstelle fungierenden Betätigungstaste 6, wenn das Bedienelement 4 an einer Rückseite 23 des Abdeckkörpers 17 angeordnet ist, oder das Durchstecken des Bedienelements 4 durch den betreffenden Betätigungsbereich 19 des Abdeckkörpers 17 hindurch, so dass das Bedienelement 4 vom Abdeckkörper 17 vorsteht und nutzerseitig z.B. direkt oder wiederum über eine Betätigungstaste etc. bedienbar ist.

In einer vorteilhaften Realisierung ist das Bedienelement 4 zur Betätigung des Absperrventils 1 mit einer an einer Frontseite 20 des Abdeckkörpers 17 angeordneten Betätigungstaste 6 gekoppelt, wie insbesondere in der Fig. 2 und 13 gezeigt ist.

Bei dem gezeigten Funktionsblock ist zwischen der Betätigungstaste 6 und dem Abdeckkörper 17 eine Zwischenplatte 24 und zwischen dem Abdeckkörper 17 und der Verlängerungsmechanik 5 ein Zwischenelement 25 angeordnet, wie insbesondere in der Fig. 2 dargestellt ist. Der Abdeckkörper 17 und das Zwischenelement 25 sind miteinander verbunden und bilden eine Einheit. Die Betätigungstaste 6 ist über die Zwischenplatte 24 mit dem Abdeckkörper 17 gekoppelt, und zwar über einen Stößel 26, der gegen ein am Abdeckkörper 17 schwenkgelagertes Übertragungselement 28 anliegt, welches andererseits gegen das Bedienelement 4 bzw. die Verlängerungsmechanik 5 anliegt. Dabei ist zusätzlich am Stößel 26 eine Feder 27 vorgesehen, welche die Betätigungstaste 6 in eine Ausgangsstellung drückt.

In einer konstruktiv vorteilhaften Ausführung ist der Funktionsblock ein solcher zum Einbau in eine wandeinbaubare sanitäre Installationsanschlussbox. Dabei dient der Funktionsblock als ein sanitärer Funktionsblock beispielsweise in an sich bekannter Weise zum Anschluss einer Sanitärarmatur, wie einer Wasserauslaufarmatur, einer Mischerarmatur oder dgl., an gebäudeseitig vorhandene Wasseranschlussrohre.

Die Fig. 5 bis 7 veranschaulichen den Funktionsblock und die in ihm aufgenommene Fluidsteuerventilvorrichtung in verschiedenen Stadien bzw. Einbausituationen eines typischen Montageprozesses zum Einbau in einer Einbauöffnung einer noch unfertigen Wand. Dabei sind die in den Figuren gezeigten Komponenten, und zwar die Zwischenplatte 24, das Zwischenelement 25, der Stößel 26, die Feder 27 und das Übertragungselement 28 optional, und können entweder während des Funktionsblock-Montagevorgangs oder danach an den Funktionsblock angebracht werden. Fig. 7 veranschaulicht den Funktionsblock in einem Ausgangszustand, der beispielsweise einem Auslieferungszustand eines Herstellers entsprechen kann. In dieser Position befindet sich der Abdeckkörper 17 bzw. die Fluidsteuerventilvorrichtung in einem, vorzugsweise maximal, ausgefahrenen Zustand.

Zur Montage des Funktionsblocks wird dieser mit seinem Grundkörper 16 in einen gebäudewandseitigen Einbauraum eingesetzt, der z.B. von einer Installationsanschlussbox bereitgestellt ist. In letzterem Fall wird zuvor die Box in einer vorbereiteten Wandöffnung eines Duschraums, Badezimmers oder dergleichen montiert, bevor die betreffende Gebäudewand fertiggestellt wurde, und daraufhin wird die Gebäudewand fertiggestellt, z.B. durch Verputzen, Verfliesen etc. Soweit noch nicht erfolgt, kann der Funktionsblock mit weiteren gewünschten Komponenten bestückt werden.

Anschließend wird der Abdeckkörper 17 zusammen mit dem Zwischenelement 25 und dem Bedienelement 4 in Richtung Wand zurückgeschoben und so an die fertige Wandöffnung angelegt. Dabei überwindet der Monteur die Verstellkraft der Verlängerungsmechanik 5, so dass sich diese verkürzen kann. In den gezeigten Ausführungen wird dazu kein Werkzeug benötigt, der Monteur braucht lediglich den Abdeckkörper 17 in Richtung Wandoberfläche zurückdrücken, bis dieser gegen die Wandoberfläche zur Anlage kommt. Über die Verlängerungsmechanik 5 verkürzt der Abdeckkörper 17 hierbei die axiale Höhe der Betätigungsvorrichtung 3, und das Bedienelement 4 folgt der Axialbewegung des Abdeckkörpers 17. Danach wird der Abdeckkörper 17 festgemacht, d.h. in seiner axialen Höhe fixiert.

Während dieser Montagebewegung des Abdeckkörpers 17 in Richtung Wand wird zuerst das Betätigungsglied 2 in seine axial eingefahrene Stellung gedrückt, bevor sich anschließend die Verlängerungsmechanik 5 verkürzt, da die Betätigungskraft für das Betätigungsglied 2 deutlich kleiner ist als die Verstellkraft der Verlängerungsmechanik. Zweckmäßigerweise wird das Betätigungsglied 2 nach Abschluss dieser Abdeckkörpermontage wieder in seine vorgerückte, ausgefahrene Stellung zurückbewegt, z.B. unter Verwendung eines federelastischen Rückstellelements. Um dies zu ermöglichen, drückt der Monteur, wie bereits oben erläutert, das Bedienelement 4 unter Überwindung der Verstellkraft für die Verlängerungsmechanik 5 in seine axial eingedrückte Stellung, wodurch sich die Verlängerungsmechanik 5 um den Axialhub des Bedienelements 4 bzw. des Betätigungsglieds 2 verkürzt. Wenn der Monteur nun das Bedienelement 4 loslässt, kann das Betätigungsglied 2 wie im normalen Ventilbetrieb selbsttätig wieder in seine ausgefahrene Stellung axial vorbewegt werden, z.B. durch die Rückstellkraft des zugehörigen Rückstellelements, wobei die Verlängerungsmechanik 5 die axiale Ausfahrbewegung des Betätigungsglieds 2 auf das Bedienelement 4 übertragen kann. Das nutzerbedienbare Bedienelement 4 weist dann den definierten Abstand von der Vorderseite des Abdeckkörpers 17 bzw. von der Soll-Oberfläche der fertigen Wand auf. Dieser Einbauzustand ist in Fig. 5 veranschaulicht, wobei wiederum die Wand der Einfachheit halber nicht gezeigt ist.

Zum Abschluss des Montagevorgangs wird die Bedientaste 6 an der Frontseite des Abdeckkörpers 17 angebracht. Im gezeigten Beispiel von Fig. 13 ist die Bedientaste 6 als flächiges Tastenelement ausgebildet, das zusammen mit einem weiteren, gleichartigen Tastenelement eine rechteckförmige Bedienoberfläche bildet, in der sich zentrisch zwei koaxiale Drehgriffelemente befinden, die der Ansteuerung weiterer, hier nicht weiter interessierender, vom Grundkörper aufgenommener Ventile dienen. Das weitere Tastenelement kann insbesondere zur Bedienung einer weiteren erfindungsgemäßen Fluidsteuerventilvorrichtung bzw. eines dem Fluidsteuerventil 1 entsprechenden weiteren Fluidsteuerventils mit zugeordneter Betätigungsvorrichtung 3 einschließlich Verlängerungsmechanik 5 dienen.

Es sei noch erwähnt, dass die Bedientaste 6 optional auch bereits montiert werden kann, bevor der Monteur die einmalige Druckbetätigung auf das Bedienelement 4 mit erhöhter Druckkraft zum Verkürzen der Verlängerungsmechanik 5 um den Axialhub des Betätigungsglieds 2 vornimmt, mit der dem Betätigungsglied das anschließende Wiederausfahren in seine Ausgangsstellung ermöglicht wird. In diesem Fall übt der Monteur die erhöhte Druckkraft auf die Bedientaste 6 aus, die diese auf das Bedienelement 6 überträgt.

Wie die gezeigten und die weiteren oben erläuterten Ausführungsbeispiele deutlich machen, stellt die Erfindung eine Fluidsteuerventilvorrichtung, z.B. mit einem druckbetätigbaren Absperrventil, zur Verfügung, die sich zur zuverlässigen und funktionell vorteilhaften Verwendung in Einbausituationen mit unterschiedlichem, verfügbarem axialem Bauraum eignet und nur relativ geringen Montageaufwand erfordert.

Des Weiteren stellt die Erfindung in vorteilhafter Weise einen mit einer solchen Fluidsteuerventilvorrichtung ausgerüsteten Funktionsblock zur Verfügung, bei welchem das nutzerbedienbare Bedienelement der Fluidsteuerventilvorrichtung in einer montagetechnisch günstigen Weise variabel höheneinstellbar gegenüber dem Grundkörper des Funktionsblocks ist, so dass es ebenso wie der z.B. als Rosette fungierende Abdeckkörper auch bei variierenden Wanddicken einer gebäudeseitigen Wand mit geringem Aufwand stets in der gewünschten axialen Lage bezüglich der fertigen Wandoberfläche positioniert werden kann.

## Patentansprüche

1. Fluidsteuerventilvorrichtung, insbesondere sanitäre Fluidsteuerventilvorrichtung, mit
- einem Fluidsteuerventil (1) mit einem translationsbeweglichen Betätigungsglied (2) und
- einer Betätigungsvorrichtung (3) mit einem nutzerbedienbaren Bedienelement (4), das zur Betätigung des Fluidsteuerventils (1) mit dem Betätigungsglied (2) gekoppelt ist,
**dadurch gekennzeichnet, dass**
- die Betätigungsvorrichtung (3) eine Verlängerungsmechanik (5) aufweist, mit der das Bedienelement (4) relativ zum Fluidsteuerventil (1) axial höhenverstellbar ist, und
- eine Verstellkraft (Fv) für die Verlängerungsmechanik (5) größer ist als eine Betätigungskraft (Fs) für das Betätigungsglied (2).

2. Fluidsteuerventilvorrichtung nach Anspruch 1, weiter **dadurch gekennzeichnet, dass** das Bedienelement (4) relativ zum Fluidsteuerventil (1) stufenlos höhenverstellbar ist.

3. Fluidsteuerventilvorrichtung nach Anspruch 1 oder 2, weiter **dadurch gekennzeichnet, dass** die Verlängerungsmechanik (5) als eine Teleskopmechanik ausgebildet ist.

4. Fluidsteuerventilvorrichtung nach einem der Ansprüche 1 bis 3, weiter **dadurch gekennzeichnet, dass** die Verlängerungsmechanik (5) zwei axial gegeneinander verschiebbare Verlängerungselemente (7, 8) aufweist, von denen ein erstes, dem Betätigungsglied (2) zugewandtes Verlängerungselement (7) an das Betätigungsglied (2) angekoppelt ist, insbesondere lösbar mittels einer Schraubverbindung (9), und ein zweites, dem Betätigungsglied (2) abgewandtes Verlängerungselement (8) das Bedienelement (4) ist oder an dieses angekoppelt ist.

5. Fluidsteuerventilvorrichtung nach Anspruch 4, weiter **dadurch gekennzeichnet, dass** das zweite Verlängerungselement (8) an einer Außenseite (10) des ersten Verlängerungselements (7) translationsbeweglich geführt ist.

6. Fluidsteuerventilvorrichtung nach Anspruch 5, weiter **dadurch gekennzeichnet, dass** das zweite Verlängerungselement (8) an einer Innenseite (11) mindestens eine Führungsnut (12) aufweist und das erste Verlängerungselement (7) an der Außenseite (10) zu jeder Führungsnut (12) ein in die Führungsnut (12) eingreifendes Führungsglied (13) aufweist, wobei das Führungsglied (13) eine zu einer Kontur der Führungsnut (12) korrespondierende Kontur aufweist.

7. Fluidsteuerventilvorrichtung nach Anspruch 6, weiter **dadurch gekennzeichnet, dass** das zweite Verlängerungselement (8) an zwei gegenüberliegenden Innenseiten (11)je eine Führungsnut (12) aufweist und das erste Verlängerungselement (7) auf zwei voneinander abgewandten Außenseiten (10) je ein Führungsglied (13) aufweist.

8. Fluidsteuerventilvorrichtung nach Anspruch 6 oder 7, weiter **dadurch gekennzeichnet, dass**
- das erste Verlängerungselement (7) an seiner Außenseite (10) ein Koppelelement (14) aus einem Weichmaterial aufweist, wobei das Koppelelement (14) reibschlüssig gegen die Innenseite (11) des zweiten Verlängerungselement (8) derart anliegt, dass eine Haftreibungskraft (F_{H}) zwischen den Verlängerungselementen (7, 8) größer ist als die Betätigungskraft (Fs) für das Betätigungsglied (2) und/oder
- das zweite Verlängerungselement (8) an seiner Innenseite (11) ein Koppelelement aus einem Weichmaterial aufweist, wobei das Koppelelement reibschlüssig gegen die Außenseite (10) des ersten Verlängerungselements (7) derart anliegt, dass eine Haftreibungskraft (F_{H}) zwischen den Verlängerungselementen (7, 8) größer ist als die Betätigungskraft (Fs) für das Betätigungsglied (2).

9. Fluidsteuerventilvorrichtung nach einem der Ansprüche 1 bis 8, weiter **gekennzeichnet durch** ein Rückstellelement (15), welches zwischen dem Absperrventil (1) und der Verlängerungsmechanik (5) angeordnet ist und auf die Verlängerungsmechanik (5) und das Betätigungsglied (2) in einer Schaltposition eine Rückstellkraft (F_{R}) in Richtung einer Ausgangsposition ausübt, wobei die Schaltposition eine gegenüber der Ausgangsposition eingefahrenen Stellung des Betätigungsglieds (2) ist.

10. Funktionsblock zum Einbau in eine wandeingebaute Installationsanschlussbox, mit
- einem Grundkörper (16),
- einem Abdeckkörper (17) und
- einer Fluidsteuerventilvorrichtung nach einem der Ansprüche 1 bis 9,
- wobei das Fluidsteuerventil (1) der Fluidsteuerventilvorrichtung am Grundkörper (16) angeordnet ist und die Betätigungsvorrichtung (3) der Fluidsteuerventilvorrichtung am Abdeckkörper (17) oder zwischen dem Grundkörper (16) und dem Abdeckkörper (17) angeordnet ist.

11. Funktionsblock nach Anspruch 10, weiter **dadurch gekennzeichnet, dass** der Abdeckkörper (17) gegenüber dem Grundkörper (16) axial höhenverstellbar ist.

12. Funktionsblock nach einem der Ansprüche 10 und 11, weiter **dadurch gekennzeichnet, dass** der Abdeckkörper (17) einen Betätigungsbereich (18) mit einer Betätigungsöffnung (19) für das Bedienelement (4) aufweist.

13. Funktionsblock nach einem der Ansprüche 10 bis 12, weiter **dadurch gekennzeichnet, dass** das Bedienelement (4) zur Betätigung des Fluidsteuerventils (1) mit einer an einer Frontseite (20) des Abdeckkörpers (17) angeordneten Betätigungstaste (6) gekoppelt ist.

14. Funktionsblock nach einem der Ansprüche 10 bis 13, weiter **dadurch gekennzeichnet, dass** er zum Einbau in eine wandeingebaute sanitäre Installationsanschlussbox eingerichtet ist.
